Europäisches Patentamt

European Patent Office

Office européen des brevets

(19)

(11) EP 0 707 371 B1

(12) **FASCICULE DE BREVET EUROPEEN**

(45) Date de publication et mention
de la délivrance du brevet:
**08.09.1999 Bulletin 1999/36**

(51) Int Cl.⁶: **H02J 13/00**

(21) Numéro de dépôt: **95460037.5**

(22) Date de dépôt: **04.10.1995**

(54) **Installation pour la transmission, par un bus, de données numériques et procédé de transmission de données numériques**

Vorrichtung und Verfahren zur Übertragung von digitalen Daten über einen Bus

Arrangement and method for digital data transmission by a bus

(84) Etats contractants désignés:
**BE CH DE DK ES GB IT LI NL**

(30) Priorité: **13.10.1994 FR 9412498**

(43) Date de publication de la demande:
**17.04.1996 Bulletin 1996/16**

(73) Titulaire: **DELTA DORE Société Anonyme
F-35270 Combourg (FR)**

(72) Inventeur: **Raffray, Pierre
F-35120 Hirel (FR)**

(74) Mandataire: **Maillet, Alain
Cabinet Le Guen & Maillet,
38, rue Levavasseur,
B.P. 91
35802 Dinard Cedex (FR)**

(56) Documents cités:
**DE-A- 2 835 549        US-A- 4 131 882
US-A- 4 222 035**

**Description**

La présente invention concerne une installation pour la transmission, par un bus, de données numériques ainsi qu'un procédé de transmission de données numériques. Une telle installation et un tel procédé sont par exemple utilisés en domotique pour transmettre entre plusieurs stations des données numériques représentatives d'ordres de commande d'appareils électriques, tels que des appareils électro-ménagers, des volets roulants, etc. ou des convecteurs.

On connaît déjà de telles installations. Elles sont constituées d'une pluralité de stations reliées à un bus sur lequel circulent les données numériques. Chaque station est soit seulement émettrice, soit seulement réceptrice et comporte alors au moins une unité commandée, soit encore émettrice et réceptrice. Le document US-A-4 222 035 divulgue une telle installation dans laquelle une seule paire de fils est utilisée pour la transmission des données numériques et l'alimentation des stations. Dans d'autres installations le bus est constitué de deux fils reliés à une source de basse tension, par exemple de l'ordre de 15 volts. Les données à transmettre d'une station à une ou plusieurs autres sont constituées d'une suite de niveaux logiques un et zéro. Pour transmettre un niveau un, une station court-circuite les deux fils du bus si bien que la tension à leurs bornes devient nulle. Par contre, pour transmettre un niveau zéro, une station n'intervient pas sur le bus.

Les stations réceptrices sont prévues pour commander des appareils électriques et sont donc généralement reliées aux fils de phase et de neutre d'un réseau de distribution électrique.

De telles installations présentent des inconvénients. En effet, elles nécessitent l'utilisation d'une alimentation basse-tension. Par ailleurs, elles obligent, pour des raisons de sécurité, à une isolation rigoureuse du bus par rapport à l'alimentation du réseau électrique. Enfin, elles nécessitent l'utilisation de deux câblages, l'un pour l'alimentation, l'autre pour le bus.

L'invention vise à remédier à ces inconvénients.

Pour ce faire, une installation selon l'invention est pourvue d'un bus unifilaire normalement au potentiel du fil de phase d'un réseau de distribution électrique. L'installation comporte un circuit limiteur de courant pour limiter l'intensité du courant qui circule sur ledit bus. Pour émettre un premier niveau logique, une station force le potentiel dudit bus à celui du fil neutre dudit réseau alors que, pour émettre un second niveau logique, elle laisse le potentiel à celui du fil de phase. Pour reconstituer les données transmises, chaque station établit un premier niveau logique lorsque le potentiel dudit bus correspond à celui du fil neutre dudit réseau et établit un second niveau logique dans les autres cas.

Ainsi, l'installation de l'invention ne nécessite qu'un seul câblage à trois fils, deux pour les fils de phase et de neutre du réseau et un pour ledit bus. Par ailleurs, la tension sur ledit bus est égale soit à celle présente sur le fil de phase soit à celle présente sur le fil de neutre. Elle ne nécessite donc pas d'isolation spéciale entre le bus et les lignes d'alimentation.

L'avantage résultant d'une telle installation est la forte amplitude des signaux de données qui est égale à celle de la tension sur le réseau de distribution. Le taux d'erreur de transmission d'une telle installation est donc faible.

Selon une autre caractéristique de l'invention, pour émettre un premier niveau logique, une station force le potentiel dudit bus à celui du fil neutre dudit réseau pendant la durée d'un multiple entier de demi-alternances de la tension sur ledit réseau.

Selon une autre caractéristique de l'invention, chaque station comprend, pour forcer ledit potentiel dudit bus, un triac dont la cathode est reliée au fil de neutre dudit réseau, l'anode audit bus, et la gâchette à une unité d'émission.

L'invention concerne également un procédé de transmission, par un bus, de données numériques entre plusieurs stations, chaque station pouvant soit seulement émettre lesdites données, soit seulement recevoir lesdites données afin de commander au moins une unité commandée, soit émettre et recevoir lesdites données, lesdites données étant constituées par une suite de premiers et seconds niveaux logiques. Ledit procédé consiste, côté émission, à transmettre lesdites données numériques sur un bus unifilaire normalement au potentiel du fil de phase d'un réseau de distribution électrique et, pour émettre un premier niveau logique, à forcer le potentiel dudit bus à celui du fil neutre dudit réseau et, pour émettre un second niveau logique, à laisser le potentiel dudit bus à celui du fil de phase dudit réseau. Coté réception, ledit procédé consiste à surveiller le potentiel sur ledit bus et, afin de reconstituer les données transmises, à établir un premier niveau logique lorsque ledit potentiel correspond à celui du fil neutre dudit réseau et à établir un second niveau logique dans les autres cas. Le procédé consiste à utiliser des moyens pour limiter l'intensité du courant circulant sur ledit bus.

Selon une autre caractéristique de l'invention, pour émettre un premier niveau logique, le procédé consiste à forcer le potentiel dudit bus à celui du fil neutre dudit réseau pendant la durée d'un multiple entier de demi-alternances de la tension sur ledit réseau.

Selon une autre caractéristique de l'invention, il consiste à vérifier le niveau de tension sur le bus lors de l'émission d'un premier niveau logique et, si ce niveau est celui du fil de phase du réseau pendant un temps prédéterminé, arrêter toute émission sur le bus.

Selon une autre caractéristique de l'invention, l'arrêt de toute émission sur le bus est accompagné de l'émission d'un signal d'alarme.

Selon une autre caractéristique de l'invention, il consiste à vérifier le niveau de tension sur le bus lors de l'émission d'un second niveau logique et, si ce niveau est celui du fil de neutre du réseau, arrêter l'émission en cours sur le bus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente une installation domotique comprenant une pluralité de stations,
la Fig. 2 représente la tension sur un bus en fonction du temps, pour la transmission d'un octet, et
la Fig. 3 représente un mode de réalisation d'une station utilisée dans l'installation.

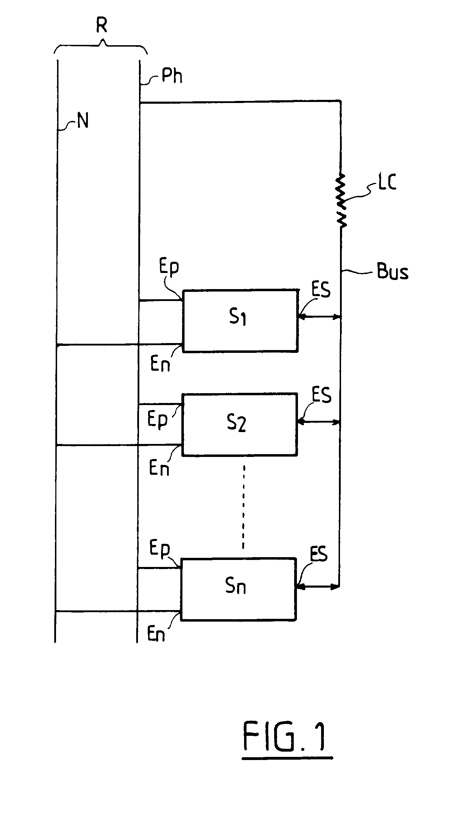

L'installation domotique représentée à la Fig. 1 comprend n stations $S_i$ (i=1 à n) dont deux entrées Ep et En sont respectivement reliées aux fils de phase Ph et de neutre N d'un réseau de distribution d'énergie électrique RES. Chaque station $S_i$ comprend une entrée/sortie ES reliée à un bus BUS unifilaire lui-même relié par l'intermédiaire d'un limiteur de courant LC au fil de phase Ph du réseau RES.

Le limiteur de courant LC représenté est une résistance dont la valeur détermine l'intensité maximale du courant pouvant circuler sur le bus BUS. On comprendra qu'il pourrait s'agir d'un circuit électronique pourvu par exemple d'autres fonctions que celle de limitation de courant.

On notera que le limiteur de courant LC peut être installé dans le tableau d'abonné.

La valeur limitée d'intensité du courant offert par le limiteur LC est inférieure à la valeur au seuil de danger pour l'individu qui entre en contact avec le fil du bus BUS.

L'envoi d'un message d'une station $S_i$ vers une ou plusieurs autres stations $S_i$ se fait par la transmission sur le bus BUS d'une suite de niveaux logiques, par exemple de premiers niveaux qui peuvent être des 1 et des seconds niveaux qui peuvent être des 0. Cette transmission est synchronisée avec chaque demi-alternance de tension sur le réseau RES. La durée d'établissement d'un niveau peut correspondre à la durée d'un multiple entier de demi-alternances, mais compte tenu du fait que l'on recherche en général une vitesse de transmission la plus grande possible, cette durée sera avantageusement celle d'une demi-alternance.

Le potentiel sur ledit bus BUS est normalement, c'est-à-dire au repos, égal au potentiel du fil de phase Ph du réseau de distribution RES. Pour émettre un premier niveau logique, par exemple le niveau un, une station $S_i$ force, pendant la durée d'une demi-alternance du réseau RES, le potentiel du bus BUS à celui du fil neutre N du réseau RES, c'est-à-dire à un potentiel quasi nul.

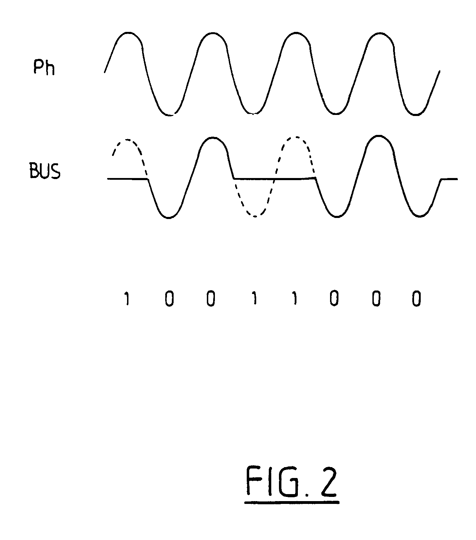

Par contre, pour émettre le second niveau logique, par exemple zéro, elle laisse le potentiel sur ledit bus BUS à celui du fil de phase Ph du réseau RES. Ainsi, on a représenté à la Fig. 2 la tension, en fonction du temps, sur le bus BUS pour la transmission d'un octet 10011000. On voit également la tension sur le fil de phase Ph.

On constate qu'un niveau un est défini par une tension nulle sur le bus BUS pendant la durée d'une demi-alternance de la tension sur le fil de phase Ph et un niveau zéro par une tension non-nulle sur le bus BUS égale à celle présente sur le fil de phase Ph.

Lors de l'émission d'un niveau un, l'intensité du courant qui circule dans le bus BUS est limitée par le limiteur de courant LC. Si celui-ci est une résistance comme cela est représenté, la valeur de l'intensité de ce courant est égale à :

$$I_{EFF} = \frac{U_{EFF}}{R}$$

où $U_{EFF}$ est la tension efficace sur le réseau RES et R la valeur de la résistance. Par exemple, pour limiter l'intensité du courant sur le bus BUS à 10 mA, et pour une tension efficace du réseau RES de 220 volts, la résistance R devra être de 22 kilo-ohms.

On notera que chaque station $S_i$ peut être seulement émettrice, ou seulement réceptrice, ou émettrice/réceptrice.

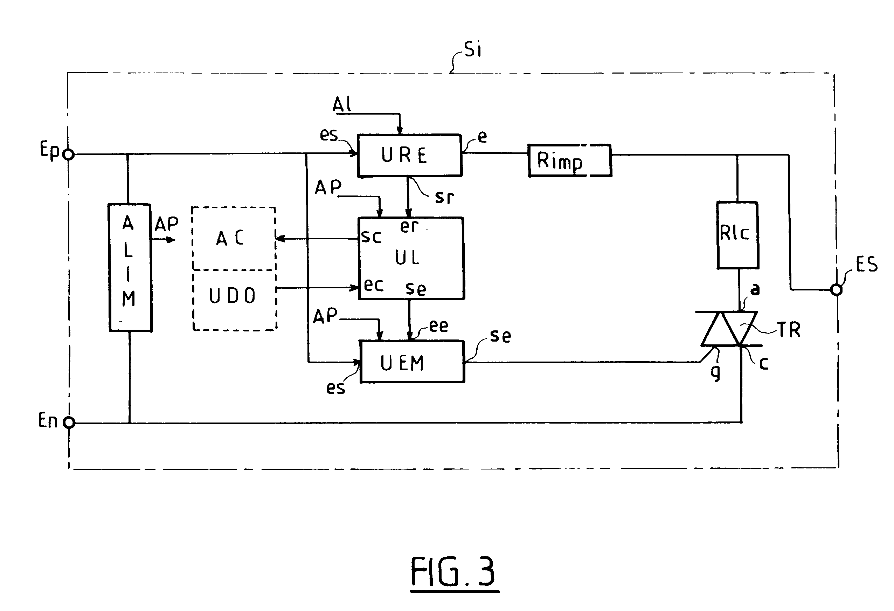

On a représenté à la Fig. 3 un mode de réalisation d'une station $S_i$ qui est à la fois émettrice et réceptrice. Elle est pourvue de bornes d'entrée $E_p$ et $E_n$ et d'une entrée/sortie ES à l'instar des stations représentées à la Fig. 1.

Elle comprend une unité d'émission UEM, une unité de réception URE, une unité logique UL, un interrupteur commandé TR, une alimentation ALIM. Sur cette Fig. 3, on a représenté, en pointillés, un appareil commandé AC qui peut être par exemple un appareil de chauffage tel qu'un convecteur, un appareil électro-ménager, etc. et une unité donneuse d'ordre UDO. L'appareil AC et l'unité UDO peuvent être inclus dans la station $S_i$ ou être extérieurs à cette dernière.

L'alimentation ALIM a ses deux bornes d'entrée qui sont respectivement reliées aux bornes d'entrée $E_p$ et $E_n$ pour y recevoir la tension du réseau RES et une borne de sortie Al reliée aux bornes d'alimentation des unités logique UL, d'émission UEM et de réception URE.

L'interrupteur commandé est, dans le mode de réalisation représenté, un triac TR. Sa cathode c est reliée à l'entrée $E_n$ de la station $S_i$ qui est normalement reliée au fil neutre N du réseau RES et son anode a est reliée, via une résistance de limitation de courant de court-circuit Rlc, à l'entrée/sortie ES.

L'unité logique UL a une entrée ec reliée à la sortie de l'unité UDO pour recevoir les ordres de commande engendrés par cette dernière et une sortie sc reliée à l'entrée de l'appareil AC pour le commander dans différents modes de fonctionnement: marche, arrêt et éventuellement d'autres. Par exemple, s'il s'agit d'un convecteur, les différents modes peuvent être les suivants: mode confort, mode économique, mode hors-gel, mode arrêt, etc.

L'unité logique UL comporte encore une entrée $er$ reliée à une sortie de l'unité de réception URE et une sortie $se$ reliée à une entrée de l'unité d'émission UEM.

L'unité d'émission UEM est pourvue d'une sortie $se$ qui est reliée à la gâchette $g$ du triac TR et d'une entrée de synchronisation $es$ qui est reliée à l'entrée $E_p$. Elle comporte encore une entrée $ee$ qui reçoit un signal de commande d'émission délivré par l'unité UL sur sa sortie $se$.

L'unité de réception URE est pourvue d'une entrée $e$ qui est reliée, via une résistance d'adaptation d'impédance $R_{imp}$, à l'entrée/sortie ES. La sortie $sr$ de l'unité de réception URE est reliée à l'entrée $er$ de l'unité logique UL. Elle comporte une entrée de synchronisation $es$ reliée à l'entrée $E_p$.

On notera que la liaison entre l'unité logique UL et l'appareil commandé AC n'est pas nécessairement unifilaire et qu'elle pourrait être un bus sur lequel peuvent circuler des données, des messages, etc. Il en est de même de la liaison entre l'unité UDO et l'unité UL.

Le fonctionnement d'une station est le suivant.

Pour émettre un niveau un, l'unité d'émission UEM délivre, sur sa sortie $se$, une impulsion de commande qui est fournie à la gâchette $g$ du triac TR. En réalité, elle le fera lorsque la tension sur son entrée $es$ passe à zéro, ceci afin de synchroniser la délivrance de ladite impulsion avec les demi-alternances présentes sur le réseau RES.

Le courant peut circuler entre l'anode $a$ et la cathode $c$ du triac TR. Le bus BUS relié à l'entrée/sortie ES passe au potentiel du fil neutre N du réseau RES. Le bus BUS est alors pincé.

Au passage à zéro de la tension sur le fil de phase Ph, le triac TR se bloque.

Un zéro est émis lorsque l'unité UEM ne délivre aucune impulsion. Cette situation est également celle du système au repos.

Lorsqu'un zéro est émis sur le bus BUS, l'unité de réception UER reçoit normalement de l'entrée ES, via la résistance Rimp, un niveau de tension qui est sensiblement égal à celui du fil de phase du réseau RES. Elle délivre un signal correspondant à l'unité logique UL qui est ainsi avertie que l'émission de ce niveau zéro s'est correctement déroulée.

Par contre, si, lors de l'émission d'un niveau zéro par la station $S_i$, l'unité de réception URE détecte un niveau de tension sur l'entrée ES qui est sensiblement égal à celui du fil de neutre N du réseau, cela signifie que le bus BUS, malgré l'émission d'un zéro, est pincé et qu'il est ainsi au niveau un. L'unité URE délivre un signal correspondant à l'unité logique UL lui signalant ainsi un problème. Ce type de problème est généralement lié à une émission, à ce moment d'un niveau un par une autre unité d'émission, problème connu sous le nom de collision. Dans ce cas, l'unité logique UL commande l'unité UEM pour arrêter l'émission en cours et l'unité URE pour surveiller l'état de la tension sur l'entrée ES jusqu'à la fin de l'émission par l'unité d'émission qui a pris la ligne.

Lorsqu'un niveau $un$ est émis sur le bus BUS, l'unité de réception UER reçoit normalement de l'entrée ES, via la résistance Rimp, un niveau de tension qui est sensiblement égal à celui du fil de neutre du réseau RES. Elle délivre un signal correspondant à l'unité logique UL qui est ainsi avertie que l'émission de ce niveau $un$ s'est correctement déroulée.

Par contre, si, lors de l'émission d'un niveau $un$ par la station $S_i$, l'unité de réception URE détecte un niveau de tension sur l'entrée ES qui est sensiblement égal à celui du fil de phase du réseau, cela signifie que le bus BUS, malgré l'émission d'un niveau $un$ qui a pour conséquence son pincement, n'est pas pincé et ne peut pas être pincé. Le problème ici est dû à la mise de l'entrée ES au potentiel du fil de phase qui a pour origine un court-circuit de l'entrée ES sur le fil de phase, par exemple dû à un mauvais branchement d'une station $S_i$ ou à une panne. Dans ce cas, l'unité logique UL commande l'unité UEM pour arrêter toute commande d'émission sur le bus BUS, laquelle pourrait endommager le triac TR. Un signal d'alarme peut également être engendré par l'unité logique UL.

En réception, à chaque demi-alternance sur l'entrée $E_p$ normalement reliée au fil Ph du réseau RES, l'unité de réception URE lit le signal présent sur son entrée $e$ et issu de l'entrée/sortie ES et le transmet à l'unité logique UL qui en déduit le niveau présent sur le bus BUS. Cette dernière reconstitue le message qui a été transmis sur le bus BUS et le transmet à son tour à l'appareil commandé AC, lequel effectue la commande appropriée.

On notera que pour pincer le bus BUS, il peut être prévu d'autres moyens que ceux qui sont décrits ici en relation avec la Fig. 3.

## Revendications

1. Installation pour la transmission, par un bus (BUS), de données numériques, ladite installation comprenant ledit bus (BUS) auquel est reliée une pluralité de stations ($S_i$), chaque station ($S_i$) étant soit seulement émettrice, soit seulement réceptrice et comportant alors au moins une unité commandée, soit encore émettrice et réceptrice, caractérisée en ce que ledit bus (BUS) est un bus unifilaire normalement au potentiel du fil de phase (Ph) d'un réseau de distribution électrique (RES), l'intensité du courant qui circule sur ledit bus (BUS) étant limitée par un circuit limiteur de courant (LC), en ce que, pour émettre un premier niveau logique, une station ($S_i$) force le potentiel dudit bus (BUS) à celui du fil neutre (N) dudit réseau (RES) alors que, pour émettre un second niveau logique, elle laisse le potentiel à celui du fil de phase (Ph) et en ce que, pour reconstituer les données transmises, chaque station (S$_i$) établit un premier niveau logique lorsque le potentiel dudit bus (BUS) correspond à celui du fil neutre (N) dudit réseau (RES) et établit un second niveau logique dans les autres cas.

2. Installation selon la revendication 1, caractérisée en ce que, pour émettre un premier niveau logique, une station (S$_i$) force le potentiel dudit bus (BUS) à celui du fil neutre (N) dudit réseau (RES) pendant la durée d'un multiple entier de demi-alternances de la tension sur ledit réseau (RES).

3. Installation selon une des revendications précédentes, caractérisée en ce que chaque station (S$_i$) comprend, pour forcer ledit potentiel dudit bus (BUS), un triac (TR) dont la cathode (c) est reliée au fil de neutre (N) dudit réseau (RES), l'anode (a) audit bus (BUS), et la gâchette (g) à une unité d'émission (UEM).

4. Procédé de transmission, par un bus (BUS), de données numériques entre plusieurs stations (S$_i$), chaque station (S$_i$) pouvant soit seulement émettre lesdites données, soit seulement recevoir lesdites données afin de commander au moins une unité commandée, soit émettre et recevoir lesdites données, lesdites données étant constituées par une suite de premiers et seconds niveaux logiques, caractérisé en ce qu'il consiste, côté émission, à transmettre lesdites données numériques sur un bus (BUS) unifilaire qui est normalement au potentiel du fil de phase (Ph) d'un réseau de distribution électrique (RES) et dont l'intensité du courant est limitée par des moyens (LC) et, pour émettre un premier niveau logique, à forcer le potentiel dudit bus (BUS) à celui du fil neutre (N) dudit réseau (RES) et, pour émettre un second niveau logique, à laisser le potentiel dudit bus (BUS) à celui du fil de phase (Ph) dudit réseau (RES), et, côté réception, à surveiller le potentiel sur ledit bus (BUS) et, afin de reconstituer les données transmises, à établir un premier niveau logique lorsque ledit potentiel correspond à celui du fil neutre (N) dudit réseau (RES) et à établir un second niveau logique dans les autres cas.

5. Procédé de transmission selon la revendication 4, caractérisé en ce que, pour émettre un premier niveau logique, il consiste à forcer le potentiel dudit bus (BUS) à celui du fil neutre (N) dudit réseau (RES) pendant la durée d'un multiple entier de demi-alternances de la tension sur ledit réseau (RES).

6. Procédé de transmission selon une des revendications 4 ou 5, caractérisé en ce qu'il consiste à vérifier le niveau de tension sur le bus (BUS) lors de l'émission du premier niveau logique et, si ce niveau est celui du fil de phase (Ph) du réseau (RES) pendant un temps prédéterminé, arrêter toute émission sur le bus (BUS).

7. Procédé de transmission selon la revendication 6, caractérisé en ce que l'arrêt de toute émission sur le bus (BUS) est accompagné de l'émission d'un signal d'alarme.

8. Procédé de transmission selon une des revendications 4 à 7, caractérisé en ce qu'il consiste à vérifier le niveau de tension sur le bus (BUS) lors de l'émission du second niveau logique et, si ce niveau est celui du fil de neutre (N) du réseau (RES), arrêter l'émission en cours sur le bus (BUS).

**Patentansprüche**

1. Vorrichtung zur Übertragung digitaler Daten über einen Bus (BUS), welche Vorrichtung den Bus (BUS) umfaßt, mit dem eine Mehrzahl von Stationen (S$_i$) verbunden ist, wobei jede Station (S$_i$) entweder nur überträgt oder nur empfängt und dann mindestens eine gesteuerte Einheit umfaßt, oder überträgt und empfängt, **dadurch gekennzeichnet,** daß der Bus (BUS) ein einadriger Bus ist, der normalerweise das Potential des Phasenleiters (PH) eines Stromversorgungsnetzes (RES) hat, wobei die Stärke des Stroms, der in dem Bus (BUS) fließt, durch eine Strombegrenzerschaltung (LC) begrenzt ist, daß zur Übertragung einer ersten logischen Größe eine Station (S$_i$) das Potential des Busses (BUS) auf das des Nulleiters (N) des Netzes (RES) setzt, während sie das Potential zur Übertragung einer zweiten logischen Größe auf dem des Phasenleiters (Ph) beläßt, und daß zur Wiederherstellung der übermittelten Daten jede Station (S$_i$) eine erste logische Größe erstellt, wenn das Potential des Busses (BUS) dem des Nulleiters (N) des Netzes (RES) entspricht, und in den anderen Fällen eine zweite logische Größe erstellt.

2. Vorrichtung nach Anspruch 1, **dadurch gekennzeichnet**, daß eine Station (S$_i$) zur Übertragung einer ersten logischen Größe das Potential des Busses (BUS) auf das Potential des Nulleiters (N) des Netzes (RES) während der Dauer eines ganzzahligen Vielfachen von Spannungshalbwellen in dem Netz (RES) setzt.

3. Vorrichtung nach einem der vorstehenden Ansprüche, **dadurch gekennzeichnet,** daß jede Station (S$_i$) zum Setzen des Potentials des Busses (BUS) ein Triac (TR) umfaßt, dessen Kathode (C) an den Nulleiter (N) des Netzes (RES), dessen Anode (a) an den Bus (BUS) und dessen Gate (g) an eine Übertragungseinheit (UEM) gelegt ist.

4. Verfahren zur Übertragung digitaler Daten zwischen mehreren Station (S$_i$) über einen Bus (BUS), wobei jede Station (S$_i$) die Daten entweder nur übertragen oder nur empfangen kann, um mindestens eine gesteuerte Einheit zu steuern, oder die Daten übertragen und empfangen kann, wobei die Daten eine Folge erster und zweiter logischer Größen umfassen, **dadurch gekennzeichnet**, daß auf der Übertragungsseite die digitalen Daten mit einem einadrigen Bus (BUS) übertragen werden, der normalerweise das Potential des Phasenleiters (Ph) eines Stromversorgungsnetzes (RES) hat und dessen Stromstärke durch Vorrichtungen (LC) begrenzt wird, zur Übertragung einer ersten logischen Größe das Potential des Busses (BUS) auf das des Nulleiters (N) des Netzes (RES) gesetzen wird, und zur Übertragung einer zweiten logischen Größe das Potential des Busses (BUS) auf dem des Phasenleiters (Ph) des Netzes (RES) belassen wird, und auf der Empfangsseite das Potential in dem Bus (BUS) überwacht wird und zur Wiederherstellung der übertragenen Daten eine erste logische Größe erstellt wird, wenn das Potential dem des Nulleiters (N) des Netzes (RES) entspricht, und in den anderen Fällen eine zweite logische Größe erstellt wird.

5. Übertragungsverfahren nach Anspruch 4, **dadurch gekennzeichnet**, daß zur Übertragung einer ersten logischen Größe das Potential des Busses (BUS) während der Dauer eines ganzzahligen Vielfachen von Spannungshalbwellen in dem Netz (RES) auf das des Nulleiters (N) des Netzes (RES) gesetzt wird.

6. Übertragungsverfahren nach einem der Ansprüche 4 oder 5, **dadurch gekennzeichnet**, daß die Spannungshöhe in dem Bus (BUS) bei der Übertragung einer ersten logischen Größe geprüft wird und, wenn diese Höhe gleich der des Phasenleiters (Ph) des Netzes (RES) während einer vorab bestimmten Zeit ist, jegliche Übertragung in dem Bus (BUS) gestoppt wird.

7. Übertragungsverfahren nach Anspruch 6, **dadurch gekennzeichnet**, daß das Stoppen jeglicher Übertragung in dem Bus (BUS) mit dem Aussenden eines Alarmsignals einhergeht.

8. Übertragungsverfahren nach einem der Ansprüche 4 bis 7, **dadurch gekennzeichnet**, daß die Spannungshöhe in dem Bus (BUS) bei der Übertragung der zweiten logischen Größe geprüft wird und, wenn diese Höhe gleich der des Nulleiters (N) des Netzes (RES) ist, die in Gang befindliche Übertragung in dem Bus (BUS) gestoppt wird.

## Claims

1. Installation for the transmission, via a bus (BUS) of digital data, the said installation comprising the said bus (BUS) to which is connected a multiplicity of stations (Si), each station (Si) being either a transmitter unit only or a receiver unit only, and comprising at least one controlled unit, again either a transmitter or receiver, characterised in that the said bus (BUS) is a single-wire bus normally at the potential of the phase wire (Ph) of an electrical distribution network (RES), the intensity of the current circulating on the said bus (BUS) being limited by a current limiter circuit (LC), in which, in order to transmit a first logic level, a station (si) drives the potential of the said bus (BUS) to that of the neutral wire (N) of the said network (RES), while, in order to transmit a second logic level, it leaves the potential at that of the phase wire (Ph), and in which, in order to reconstitute the data transmitted, each station (Si) establishes a first logic level when the potential of the said bus (BUS) corresponds to that of the neutral wire (N) of the said network (RES) and establishes a second logic level in the other cases.

2. Installation in accordance with Claim 1, characterised in that, to transmit a first logic level, a station (Si) drives the potential of the said bus (BUS) to that of the neutral wire (N) of the said network (RES) for the duration of an entire multiple of the half-waves of the voltage on the said network (RES).

3. Installation according to one of the preceding Claims, characterised in that each station (Si) comprises, in order to drive the said potential of the said bus (BUS), a triac thyristor (TR) of which the cathode (c) is connected to the neutral wire (N) of the said network (RES), the anode (a) to the said bus, and the gate (g) to a transmitting unit (UEM).

4. Transmission process, via a bus (BUS), of digital data between several stations (Si), each station being capable either of only transmitting the said data, or of only receiving the said data, in order to control at least one controlled unit, either to transmit or receive the said data, the said data consisting of a sequence of first and second logic levels, characterised in that it consists, on the transmission side, of the transmission of the said digital data on a single-wire bus (BUS), which is normally at the potential of the phase wire (Ph) of an electrical distribution network (RES) and of which the intensity of the current is limited by media (LC) and, in order to transmit a first logic level, to drive the potential of the said bus (BUS) to that of the neutral wire (N) of the said network (RES) and, in order to transmit a second logic level, to leave the potential of the said bus (BUS) at that of the phase wire (Ph) of the said network (RES), and, on the receiving side, of monitoring the potential on the said bus (BUS), and, in order to reconstitute the transmitted data, of establishing a first logic stage when the said potential corresponds to that of the neutral wire (N) of the said network (RES) and of establishing a second logic level in the other cases.

5. Transmission process according to Claim 4, characterised in that, in order to transmit a first logic level, it consists of driving the potential of the said bus (BUS) to that of the neutral wire of the said network (RES) for the duration of a full multiple of the half-eaves of the voltage on the said network (RES).

6. Transmission process according to one of Claims 4 or 5, characterised in that it consists of verifying the voltage level on the bus (BUS) during the transmission of the first logic level and, if this level is that of the phase wire (Ph) of the network (RES) for a predetermined period of time, to stop any transmission on the bus (BUS).

7. Transmission process according to Claim 6, characterised in that the stopping of any transmission on the bus (BUS) is accompanied by the issue of an alarm signal.

8. Transmission process according to one of Claims 4 to 7, characterised in that it consists of verifying the voltage level on the bus (BUS) during the transmission of the second logic level, and if this level is that of the neutral wire (N) of the network (RES), will stop the transmission in progress on the bus (BUS).

# FIG.1

Ph

BUS

1    0    0    1    1    0    0    0

# FIG. 2

FIG.3